# EUROPÄISCHE PATENTSCHRIFT

(11) **EP 4 403 333 B1**
(45) Veröffentlichungstag und Bekanntmachung des Hinweises auf die Patenterteilung: **20.08.2025**
(21) Anmeldenummer: 23200130.5
(22) Anmeldetag: 27.09.2023
(51) Int. Cl.: B29C 45/76, B29C 45/14, B29L 31/36

(54) **EINLEGER UND VERFAHREN ZUM ANFAHREN EINES SPRITZGUSSPROZESSES**
INSERT AND METHOD FOR STARTING AN INJECTION MOULDING PROCESS
INSERT ET PROCÉDÉ DE DÉMARRAGE D'UN PROCESSUS DE MOULAGE PAR INJECTION

(30) Priorität: 18.01.2023 DE 102023101108
(43) Veröffentlichungstag der Anmeldung: 24.07.2024
(73) Patentinhaber: MD Elektronik GmbH, 84478 Waldkraiburg (DE)
(72) Erfinder: Andert, Alexander, 84478 Waldkraiburg (DE)

(56) Entgegenhaltungen:
- US-A1- 2021 379 803
- PROYAG DATTA ET AL: "Method for polymer hot embossing process development", MICROSYSTEM TECHNOLOGIES ; MICRO AND NANOSYSTEMS INFORMATION STORAGE AND PROCESSING SYSTEMS, SPRINGER, BERLIN, DE, vol. 13, no. 3-4, 19 May 2006 (2006-05-19), pages 265 - 270, XP019474562, ISSN: 1432-1858, DOI: 10.1007/S00542-006-0183-2
- "Spritzgiessen fur Praktiker", 1 January 2013, CARL HANSER VERLAG, article ANONYMOUS: "Passage Spritzgiessen fur Praktiker", pages: 1 - 10, XP093144203

## Beschreibung

### Technisches Gebiet

Die Erfindung betrifft einen Einleger für ein Spritzgusswerkzeug in der Kabelkonfektion zum Durchführen eines Anfahrprozesses in dem Spritzgusswerkzeug.

### Stand der Technik

In der Spritzgusstechnik, insbesondere wenn eine Komponente umspritzt werden muss, werden Einleger benötigt, um den Spritzgussprozess durch ein sogenanntes Anfahren zu starten. Dieser Anfahrprozess ist notwendig damit eine Prozessfindung aller Parameter in Bezug auf volumetrisches als auch thermisches Gleichgewicht durchgeführt bzw. erlangt werden kann, oder sich die Parameter in eine vorgegebene Toleranz einpendeln können. Der Anfahrprozess kann ohne Einleger nicht gestartet werden, da sonst das Spritzgusswerkzeug überspritzt wird und das Spritzgusswerkzeug zur Reinigung ausgebaut werden müsste. Oder, es werden Gut-Teile (ganze Leitungssätze) verwendet, welche jedoch anschließend entsorgt werden müssen, da die Qualität nicht stimmt bzw. sichergestellt werden kann. Somit würden höhere Kosten anfallen.

Ein Einleger umfasst im Stand der Technik ein konfektioniertes Kabel, wobei das eigentliche Kabel bzw. die Leitung aus praktischen Gründen gekürzt ist. Die (Kabel-)Einleger werden gesondert bzw. zusätzlich hergestellt und bringen einen Mehraufwand und somit auch Kosten mit sich. In einem Ausführungsbeispiel im Stand der Technik weist ein (Kabel-)Einleger folgende Komponenten auf: einen Kontaktträger, zwei Kontakte, einen harten Stopfen, einen weichen Stopfen sowie eine Leitung. Hier können auch noch weiter Komponenten hinzukommen, dies ist stark vom Stecker abhängig. Dasselbe gilt auch dann für die im Folgenden beschriebenen Prozessschritte. Dieser (Kabel-)Einleger wird dann mit folgenden Prozessschritten zusammengebaut: Leitung abisolieren, Litzen ausrichten, den weichen Stopfen aufsetzen, den harten Stopfen aufsetzen, die Litzen abisolieren, die Kontakte crimpen, die Kontakte ausrichten, die Kontakte prüfen, die Kontakte ins Gehäuse fügen, eine Verrastprüfung der Kontakte im Gehäuse durchführen, eine Montage der Stopfen ins Gehäuse durchführen und eine finale Prüfung durchführen.

Alle oben genannten Komponenten werden aus Gut-Ware entnommen und auch produziert. Es entstehen dadurch für die (Kabel-)Einleger beträchtliche Kosten. Weiterhin benötigt jedes Spritzgusswerkzeug bzw. jeder zu umspritzende Stecker seinen eigenen (Kabel-)Einleger, wodurch eine große Variantenanzahl an verschiedenen (Kabel-)Einlegern notwendig oder vorhanden ist. Darüber hinaus gibt es Stecker die eine weitere Komponente, eine sogenannte Metallbuchse, beim Umspritzten, und somit auch im Anfahrprozess, benötigen. Auch hier könnten weitere Komponenten eingelegt werden, abhängig vom Stecker. Die Metallbuchse wird gefertigt und vor dem Umspritzprozess ebenfalls ins Spritzgusswerkzeug eingelegt damit das zu umspritzende Volumen dem originalen Stecker entspricht. Die Metallbuchse erzeugt zusätzliche Kosten. Neben den Kosten gibt es auch einen Umweltaspekt. (Kabel-)Einleger, die für den Anfahrprozess umspritzt wurden, werden als Müll deklariert und Entsorgungskosten entstehen, da die (Kabel-)Einleger aus verschiedenen Werkstoffen bestehen, d.h. einen Verbundwerkstoff aus unterschiedlichen Kunststoffen, Kupfer, TPU, EVA und/oder Metall bilden, und eine Wiederverwendung bzw. ein Weiterverkauf der (Kabel-)Einleger nicht möglich ist.

Die Druckschrift US 2021/379803 A1 betrifft einen Polymerformeinsatz für ein Spritzgusswerkzeug. Der Polymereinsatz umfasst einen Einsatzkörperteil mit einer Außenform, die zum Einsetzen in eine im Spritzgusswerkzeug angeordnete Einsatzkavität geeignet ist, wobei der Einsatzkörperteil mindestens zwei unterschiedliche Polymermaterialien mit unterschiedlichen physikalischen Eigenschaften umfasst.

Die Druckschrift "Method for polymer hot embossing process development" von Proyag Datta und Jost Goettert betrifft eine Methodik zur Entwicklung eines Heißprägeverfahrens für HAR-Mikrostrukturen auf der Grundlage bekannter Materialeigenschaften und unter Berücksichtigung des kumulativen Verhaltens von Werkzeug, Material und Maschine.

Auf Seite 94 des Handbuchs "Spritzgiessen für Praktiker", 1. Januar 2013 (2013-01-01), Carl Hanser Verlag, wird beschrieben, dass zum Anfahren eines Spritzgießprozesses mehrere Zyklen notwendig sind, bis sich ein thermisches Gleichgewicht einstellt.

### Beschreibung der Erfindung

Es ist daher eine Aufgabe der vorliegenden Erfindung einen Einleger und einen Anfahrprozess für ein Spritzgusswerkzeug bereitzustellen, bei denen Kosten in Bezug auf die Einleger reduziert werden, gleichzeitig eine umweltschonende Produktion ermöglicht wird, Kapazitäten an Anlagen mit dem Einleger reduziert werden, damit diese für eine Serienfertigung genutzt werden können, und die Anzahl an verschiedenen Einlegern reduziert wird.

Die oben genannte Aufgabe wird durch einen Einleger nach Anspruch 1 gelöst. Weitere vorteilhafte Ausgestaltungsformen der Erfindung lassen sich den Unteransprüchen, der Beschreibung sowie den Zeichnungen entnehmen. Insbesondere wird die oben genannte Aufgabe gelöst durch einen Einleger für ein Spritzgusswerkzeug, wobei der Einleger im Spritzgusswerkzeug ein mit Spritzgussmaterial umspritzbares vorbestimmtes Volumen bildet, und der Einleger vollständig aus Kunststoff hergestellt ist.

Der vorliegende Einleger ist für Spritzgusswerkzeuge in der Kabelkonfektion bestimmt. Der vorliegende Einleger hat die Vorteile, dass er preiswerter und umweltschonender als konfektionierte Kabel-Einleger aus dem Stand der Technik ist. Vorliegende Einleger können nach der Umspritzung weiterverarbeitet oder auch weiterverkauft werden. Zusätzliche Einleger-Komponenten, wie eine Metall-Buchse, werden nicht benötigt. Weiterhin wird die Kapazität von betroffenen Anlagen entlastet bzw. entfällt. Der Einleger kann mannlos am Wochenende, in einer sogenannten Geisterschicht, erzeugt werden. Die Qualitätskontrolle ist beim (Kunststoff-)Einleger deutlich niedriger als bei (Kabel-)Einlegern im Stand der Technik.

Bevorzugt entspricht der Kunststoff des Einlegers dem Spritzgussmaterial. In diesem Fall wäre das Ergebnis ein monolithischer Kunststoffgegenstand, der sehr einfach wiederverwendet oder verkauft werden kann. Für die Wiederverwendung kann der Einleger in diesem Fall einfach zerkleinert und recycelt werden.

Bevorzugt umfasst der Kunststoff Recyclat. Insbesondere wird Recyclat verwendet, das aus Anguss hergestellt ist, der als Nebenprodukt bei der Steckerherstellung generiert wird. Der Anguss wird gesammelt, gemahlen und kann dann als Werkstoff für die (Kunststoff-)Einleger dienen.

Bevorzugt umfasst der Einleger zumindest drei Bereiche: einen ersten Bereich, der in einem Spritzgusswerkzeug als Klemmbereich für eine Leitung verwendbar ist, einen zweiten Bereich, der in dem Spritzgusswerkzeug als Übergangsbereich zwischen dem ersten und einem dritten Bereich umspritzbar ist, und dem dritten Bereich, der in dem Spritzgusswerkzeug als Klemmbereich für einen Stecker verwendbar ist.

Der erste Bereich soll einen Kabeldurchmesser darstellen und ersetzen. Durch Einsätze im Spritzgusswerkzeug kann die Geometrie, der Durchmesser, die Länge und/oder auch die Anzahl der Leitungen getauscht und geändert werden. Der erste Bereich wird bevorzugt beim Umspritzen abgeklemmt bzw. abgedichtet, so dass kein Spritzgussmaterial bzw. keine Schmelze während des Umspritzens aus dem Spritzgusswerkezug austreten kann. Der dritte Bereich stellt einen jeweiligen Stecker dar, der an einem konfektionierten Kabel befestigt ist. Allerdings wird die Geometrie deutlich vereinfacht, und umfasst bevorzugt lediglich eine Aufnahme und einen Klemmbereich. Die vereinfachte Geometrie reduziert Kosten an dem Spritzgusswerkzeug. Weiterhin wird der dritte Bereich bevorzugt als Einsatz in dem Spritzgusswerkzeug umgesetzt, damit die Geometrie, die Größe, die Länge und/oder auch die Anzahl variiert werden kann. Insbesondere weist ein Stecker auch einen Klemmbereich auf, damit auch hier kein Spritzgussmaterial bzw. keine Schmelze während des Umspritzens austreten kann.

Bevorzugt umfasst der zweite Bereich ein flexibles Element, insbesondere eine Spirale. Der flexible Bereich ermöglicht dem Einleger flexible Eigenschaften oder Funktionen wie ein konfektioniertes Kabel selbst. So kann die Anzahl an verschiedenen Einlegern reduziert werden, weil zum Beispiel ein Stecker unterschiedliche Winkel aufweisen kann und/oder auch die Ausrichtung unterschiedlich sein kann (rechts/links, oben/unten usw.), ein Einleger sowohl einen Schlauch mit unterschiedlichen Durchmessern und Formen als auch ein Kabel mit unterschiedlichen Durchmessern und Formen imitieren kann. Dies wird einfach durch Wechseleinsätze geändert. Ein Kabel ist eingerichtet elektrische und/oder optische Signale zu übertragen. Ein Schlauch ist im Wesentlichen eine Hülle für ein oder mehrere Leitungen oder Litzen. Ein Schlauch wird insbesondere dann eingesetzt, wenn die Leitung gesplittet werden muss, d.h. aus einer Leitung werden die Litzen getrennt und dann durch den Schlauch geschützt, der über die Litzen geschoben wird. Durch das Nachstellen der flexiblen Eigenschaften einer Leitung oder eines Schlauchs kann der vorliegende (Kunststoff-)Einleger identisch wie die Kabel-Einleger aus dem Stand der Technik eingesetzt werden.

Bevorzugt kann der dritte Bereich durch das flexible Element im zweiten Bereich zumindest in der Dimension einer Halbkugel gegenüber dem ersten Bereich verbogen angeordnet werden. Die Dimension kann insbesondere auch mehr als nur eine Halbkugel umfassen. Der zweite Bereich kann insbesondere so verformt werden, dass sich der erste und dritte Bereich berühren Der zweite Bereich soll dem (Kunststoff-)Einleger dieselben oder zumindest ähnliche flexible Eigenschaften verleihen, die bei einem (Kabel-)Einleger im Stand der Technik vorliegen. Der zweite Bereich wird bevorzugt im Spritzgusswerkzeug als Einsatz umgesetzt, bei dem die Geometrie, der Durchmesser, die Länge und/oder die Anzahl an flexiblen Elementen oder Spiralen variabel ist. Das flexible Element oder die Spirale ersetzt zumindest teilweise das Volumen des Kontaktträgers, das Volumen von Adern der Leitung und/oder das Volumen eventueller Metall-Einleger und bleibt gleichzeitig flexibel wie ein (Kabel-)Einleger aus dem Stand der Technik. Insbesondere geht die Beweglichkeit bis zu 360° in alle Richtungen, d.h. einem Kugelbereich. Insgesamt ermöglicht die Varianz der flexiblen Geometrie, d.h. des flexiblen Elements oder der Spirale, alle Abgänge oder Varianten mit nur einer (Einleger-)Geometrie abzudecken.

Das Volumen des Einlegers entspricht dem Volumen eines zu umspritzenden konfektionierten Kabels. Das Volumen ist ein wesentlicher Prozessparameter beim Umspritzen. Je genauer ein Einleger im Anfahrprozess das Volumen des final zu umspritzenden Gegenstands, d.h. eines konfektionierten Kabels, wiedergibt oder imitiert, desto genauer kann der Prozess eingestellt werden. Da der Kunststoff des vorliegenden Einlegers leicht zu bearbeiten ist, kann das Volumen des Einlegers auch sehr leicht, kostengünstig und präzise angepasst werden.

Ein Verfahren zum Anfahren eines Spritzgussprozessesweist die folgenden Schritte auf: Einlegen eines Kunststoff-Einlegers in ein Spritzgusswerkzeug, Schließen des Spritzgusswerkzeugs und starten des Anfahrprozesses, Finden aller Parameter, so dass ein volumetrisches und thermisches Gleichgewicht erlangt wird oder sich die Parameter in eine vorgegebene Toleranz einpendeln.

Der beschriebene Anfahrprozess hat den Vorteil, dass er preiswerter und umweltschonender durchgeführt werden kann, als Anfahrprozesse im Stand der Technik bei denen Kabel-Einleger verwendet werden. Für den vorliegenden Anfahrprozess sind keine neuen Maschinen oder Spritzgusswerkzeuge notwendig. Für das Verfahren genügt ein einfaches Spritzgusswerkzeug. Die Spritzgusswerkzeuge für das Verfahren können günstig sein, und es ist keine Freigabe eines Kunden notwendig. Das Verfahren ist leicht implementierbar bzw. umsetzbar, sowie übertragbar auf viele verschiedene Spritzgussprojekte oder Steckertypen. Das Verfahren ist zudem weltweit schnell übertragbar. Das vorliegende Verfahren wird bevorzugt mit einem modularen Spritzgusswerkzeug umgesetzt, welches Einsätze verwendet und somit zum Beispiel sowohl für Kabel als auch für Schläuche verwendbar ist.

Bevorzugt werden die Schritte wiederholt, bis Prozessstabilität erreicht ist. Die Anzahl an Wiederholungen ist individuell für jeden Prozess einstellbar. Mit einer wiederholten Abfolge von Verfahrensschritten kann somit leicht ein optimaler Spritzgussprozess erreicht bzw. eingestellt werden. Die Kunststoffeinleger ermöglichen eine schnelle Wiederholung, da sie einfach und kostengünstig eingesetzt werden können.

Bevorzugt müssen neben dem Einlegen des Kunststoff-Einlegers keine weiteren Komponenten in das Spritzgusswerkzeug eingelegt werden. Insbesondere werden zusätzliche Einleger-Komponenten, wie eine Metall-Buchse im Stand der Technik, nicht benötigt. So kann insgesamt das Einlegen von Komponenten für einen Anfahrprozess vereinfacht werden, da zum Bespiel kein Einlegen einer Metall-Buchse notwendig ist. Dabei kann auch die Wahrscheinlichkeit von Schäden am Spritzgusswerkzeug, zum Beispiel durch falsches Einlegen der Metall-Buchsen ins Spritzgusswerkzeug, reduziert werden.

Die folgende Beschreibung von Ausführungsformen erfolgt unter Bezugnahme auf die begleitenden Figuren. Dabei zeigen:
- Fig. 1: eine schematische Darstellung einer Ausführungsform eines Einlegers;
- Fig. 2: eine schematische Darstellung einer zweiten Ausführungsform des Einlegers;
- Fig. 3: eine schematische Darstellung einer Ausführungsform eines Kabel-Einlegers aus dem Stand der Technik;
- Fig. 4: eine schematische Darstellung eines (Teils eines) Spritzgusswerkzeugs mit dem Kabel-Einleger aus Fig. 3;
- Fig. 5: die schematische Darstellung aus Fig. 4 mit dem eingelegten Einleger aus Fig. 1; und
- Fig. 6: eine schematische Darstellung einer Ausführungsform eines Endprodukts.

Im Folgenden werden bevorzugte Ausführungsformen im Detail mit Bezug auf die beigefügten Figuren beschrieben.

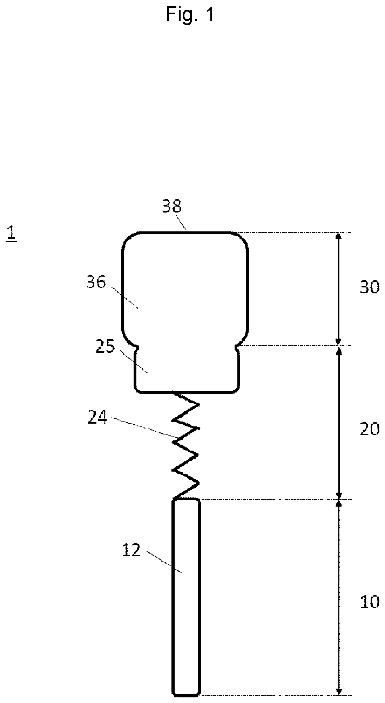

Fig. 1 zeigt eine Ausführungsform eines Einlegers 1 für ein Spritzgusswerkzeug 40. Der Einleger 1 ist geeignet zum Durchführen eines Anfahrprozesses in einem Spritzgusswerkzeug 40. Im Einsatz bildet der Einleger 1 im Spritzgusswerkzeug 40 ein mit Spritzgussmaterial umspritzbares vorbestimmtes Volumen. Der Einleger 1 ist, im Gegensatz zum Stand der Technik, vollständig aus Kunststoff hergestellt. Bevorzugt ist der Einleger 1 aus dem gleichen Kunststoff gebildet, mit dem der Einleger 1 umspritzt wird.

Der Kunststoff aus dem der Einleger 1 hergestellt ist, kann Recyclat umfassen. Recyclat kann aus Anguss, der bei der Steckerherstellung entsteht, hergestellt werden. Zur Herstellung bzw. Verwendung des Recyclats wird der Anguss, wenn er erhärtet ist, zerkleinert bzw. gemahlen, so dass er ein Recyclat (unterschiedliche Teilchengröße in der Regel im Bereich von 2-5 mm) bildet, oder weiter zu Regranulat verarbeitet werden kann, welches eine gleichförmige Granulatgröße aufweist. Dieses Regranulat/Recyclat kann auch zumindest während des Anfahrprozesses in dem Spritzgusswerkzeug 40 zum Umspritzen des Einlegers 1 verwendet werden.

Ein Einleger 1, der vollständig aus Kunststoff gebildet ist, kann einfacher recycelt werden als ein Verbundstoff, wie ein Kabel-Einleger 150 im Stand der Technik. Ist der Einleger 1 zudem aus dem gleichen Material hergestellt mit dem er auch umspritzt wird, so erhält man als Endprodukt 170 einen monolithischen Kunststoff. Dieser monolithische Kunststoff kann einfach recycelt werden, in dem er zum Beispiel zerkleinert wird und erneut einem Spritzgussverfahren zugeführt wird.

Der dargestellte Einleger 1 umfasst bevorzugt drei Bereiche 10, 20, 30. Der erste Bereich 10 ist einer Leitung 12 nachempfunden. Der erste Bereich 10 ist in einem Spritzgusswerkzeug 40 als Klemmbereich für eine Leitung 12 verwendbar. Die Geometrie der Leitung 12 im Anfahrprozess entspricht der Geometrie einer später zu umspritzenden konfektionierten Leitung. Weiterhin weist der dargestellte Einleger 1 einen zweiten Bereich 20 auf. Der zweite Bereich 20 bildet in dem Spritzgusswerkzeug 40 einen Übergangsbereich zwischen dem ersten 10 und einem dritten Bereich 30. Der zweite Bereich 20 ist im Wesentlichen der Bereich, der umspritzt wird, d.h. in diesem Bereich wird ein Großteil des verwendeten Spritzgussmaterials am Einleger 1 umspritzt. Weiterhin weist der dargestellte Einleger 1 einen dritten Bereich 30 auf. Der dritte Bereich 30 imitiert einen Stecker, der an einer konfektionierten Leitung befestigt ist. Der dritte Bereich 30 ist in dem Spritzgusswerkzeug 40 als Klemmbereich für einen Stecker 36 verwendbar. Die Steckseite 38 ist beim dargestellten Einleger 1 nur angedeutet, d.h. sie weist kein Steckgesicht zur Verbindung mit einem passenden Gegensteckverbinder auf, und dient zur Orientierung bzw. Ausrichtung des Einlegers 1.

Der zweite Bereich 20 des dargestellten Einlegers 1 umfasst ein flexibles Element 24. Das flexible Element 24 ist in der dargestellten Ausführungsform als Spirale dargestellt. In alternativen Ausführungsformen kann das flexible Element 24 andere Formen aufweisen, solange die Funktion der Flexibilität gegeben ist. Das flexible Element 24 im zweiten Bereich 20 ermöglicht es den dritten Bereich 30 zumindest im Bereich einer Halbkugel S oder mehr als einer Halbkugel S, bevorzugter im Bereich einer Kugel, gegenüber dem ersten Bereich 10 verbogen anzuordnen. So können zum Beispiel in einem Spritzgusswerkzeug 40 mit einem Einleger-Typ verschiedene Leitungsabgänge, d.h. gerade oder gewinkelt, in Bezug auf einen Steckertyp abgebildet werden.

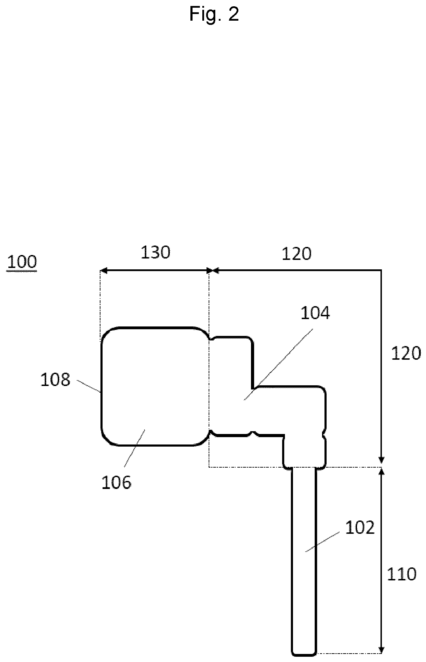

In einer alternativen Ausführungsform, die in Fig. 2 dargestellt ist, weist der Einleger 100 ein Anschlussteil 104 im zweiten Bereich 120 auf, dass nicht flexibel ist sondern eine starre Form besitzt. Da der Einleger 150 aus Kunststoff gebildet ist, können beliebige Formen für das Anschlussteil 104 einfach erzeugt und verwendet werden. Der Einleger 150 weist weiterhin an zwei verschiedenen Seiten des Anschlussteils 104 einen Leitungsteil 102 sowie einen Steckerteil 106 auf. Somit kann der Einleger 150 auch in einen ersten 110, zweiten 120 und dritten Bereich 130 unterteilt werden. Im Einsatz kann jeder der drei Bereiche 110, 120, 130 separat gestaltet sein.

Falls es erforderlich ist, können die drei Bereiche 10, 20, 30, 110, 120, 130 eines Einlegers 1, 100 unterschiedliche Kunststoffe umfassen. Unabhängig davon welches Material gewählt wird oder ob der zweite Bereich 20, 120 ein flexibles Element 24 umfasst oder nicht, muss das Volumen des Einlegers 1, 100 dem Volumen eines zu umspritzenden konfektionierten Kabels entsprechen, d.h. dem Kabel, das später im (fortlaufenden oder Serien-) Spritzgussprozess, der nach dem Anfahren stattfindet, umspritzt wird.

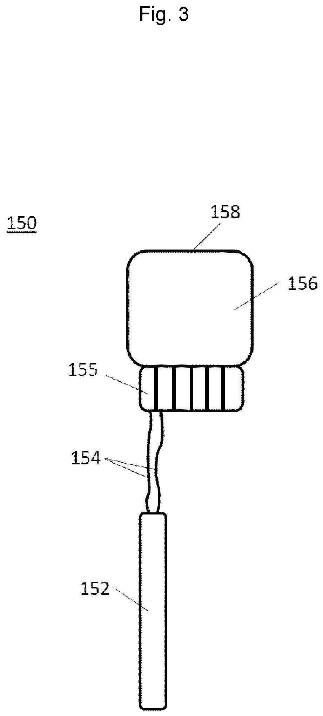

Im Stand der Technik werden Kabel-Einleger 150 (s. Fig. 3) verwendet um einen Anfahrprozess durchzuführen. Die Kabel-Einleger 150 entsprechen kurzen Leitungen 152, die mit einem Stecker 156 konfektioniert wurden. Beim Konfektionieren wurden die Adern 154 der Leitung 152 über einen Anschluss 155 mit dem Stecker 156 verbunden. Die Steckseite 158 am Stecker 156 wäre prinzipiell geeignet mit einem passenden Gegensteckverbinder gesteckt zu werden.

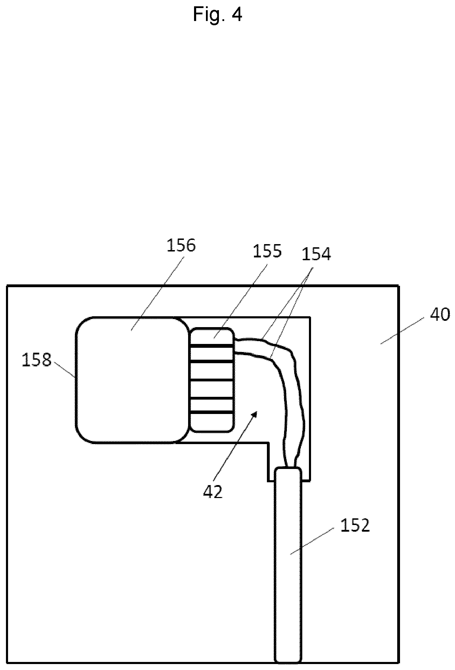

Beim Anfahren im Stand der Technik wird ein Kabeleinleger 150 in ein Spritzgusswerkzeug 40, bzw. in eine Hälfte eines Spritgusswerkzeugs 40 eingelegt (s. Fig. 4). In der dargestellten Ausführungsform ist die Leitung 152 um 90 Grad gebogen zum Stecker 156, so dass die Adern 154 der Leitung 152 gebogen angeordnet sind. Vertiefungen oder Einsätze im Spritzgusswerkzeug 40 bilden eine äußere Form. Vertiefungen, die auch nach dem Einlegen eines Kabel-Einlegers 150 hohl oder unausgefüllt bleiben, bilden Volumen für Spritzgussmaterial 42. Indem die Einsätze des Spritzgusswerkzeugs 40, und damit die Vertiefungen, und die Kabel-Einleger 152 aneinander angepasst sind, können bestimmte Volumina von Spritzgussmaterial an einem Kabel-Einleger 150 umspritzt werden.

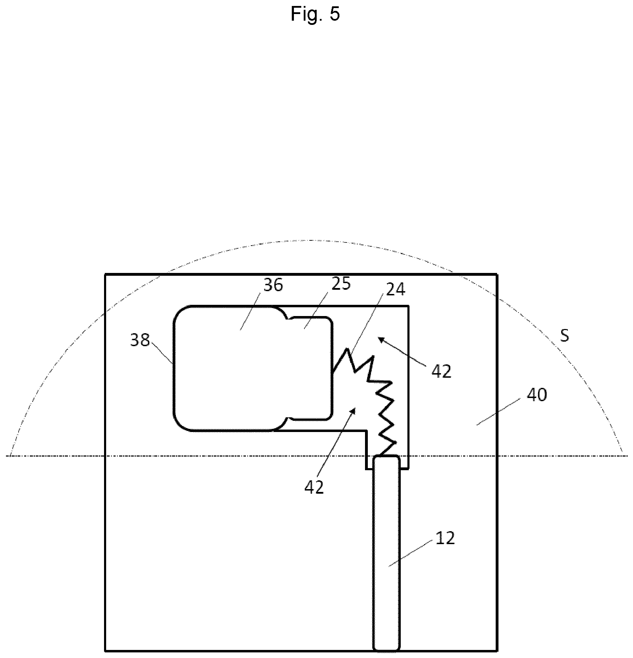

Das vorliegende Verfahren des Anfahrens eines Spritzgussprozesses wird mit einem (Kunststoff-)Einleger 1 durchgeführt (s. Fig. 5). Das Verfahren wird so durchgeführt, dass zunächst ein Kunststoff-Einleger 1 in ein Spritzgusswerkzeug 40 bzw. eine Hälfte eines Spritzgusswerkzeugs 40 eingelegt wird. Das Einlegen des Kunststoff-Einlegers 1 ist besonders einfach, da bevorzugt keine weiteren Komponenten in das Spritzgusswerkzeug 40 eingelegt werden müssen. Insbesondere durch ein flexibles Element 24 kann eine Einleger-Geometrie für verschiedene Spritzguss-Geometrien verwendet werden. Insbesondere das Volumen des flexiblen Elements 24 und des Anschlussteils 25 wird so gestaltet, dass es dem Volumen des entsprechenden Anschlusses 155 und der Adern 154 entspricht. Indem die Einsätze des Spritzgusswerkzeugs 40, und dadurch die Vertiefungen, und der Einleger 1 aneinander angepasst sind, können bestimmte Volumina von Spritzgussmaterial an den Einleger 1 umspritzt werden.

Nach dem Einlegen des Einlegers 1 wird das Spritzgusswerkzeug 40 geschlossen und der Anfahrprozess gestartet. Während des Anfahrens werden dann alle wesentlichen Parameter bestimmt bzw. sind die bereits fixierten Parameter mit den Toleranzen schon vorgegeben, und es wird produziert bis sich die Prozesswerte innerhalb der Toleranzen befinden, so dass ein volumetrisches und thermisches Gleichgewicht erlangt wird oder sich die Parameter in eine vorgegebene Toleranz einpendeln. Das Anfahren kann solange wiederholt werden, bis Prozessstabilität erreicht ist.

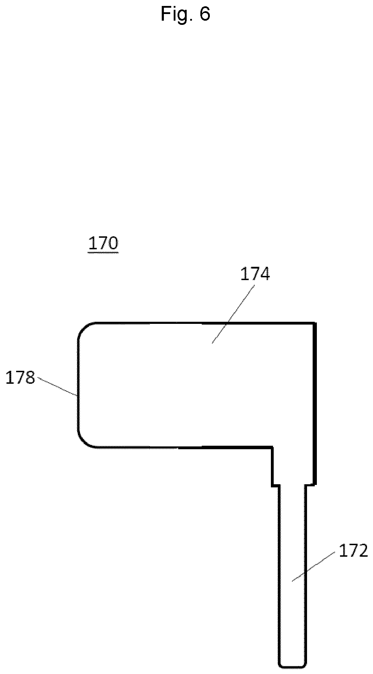

Fig. 6 zeigte eine Ausführungsform eines Endprodukts 170, das aus einem Anfahrprozess in einem Spritzgusswerkzeug, entstanden ist. Das Endprodukt 170 ist ein umspritzter Einleger 1, 100, 150, der zumindest einen Leitungsteil 172, ein umspritztes Anschlussteil 174 sowie eine Steckseite 178 sichtbar aufweist. Insbesondere ist das Außenvolumen des Endprodukts 170 vom (Kunststoff-)Einleger 1, 100 das gleiche wie beim (Kabel-)Einleger 150.

### BEZUGSZEICHENLISTE

- 1: Einleger
- 10: erster Bereich
- 12: Leitungsteil
- 20: zweiter Bereich
- 24: flexibles Element
- 25: Anschlussteil
- 30: dritter Bereich
- 36: Steckerteil
- 38: Steckseite
- 40: Spritzgusswerkzeug
- 42: Volumen für Spritzgussmaterial
- 100: Einleger
- 102: Leitungsteil
- 104: Anschlussteil
- 106: Steckerteil
- 108: Steckseite
- 110: erster Bereich
- 120: zweiter Bereich
- 130: dritter Bereich
- 150: Kabel-Einleger
- 152: Leitung
- 154: Adern
- 155: Anschluss
- 156: Stecker
- 158: Steckseite
- 170: Endprodukt
- 172: Leitungsteil
- 174: umspritztes Anschlussteil
- 178: Steckseite
- S: Halbkugel

## Patentansprüche

1. Einleger (1) für ein Spritzgusswerkzeug (40) in der Kabelkonfektion zum Durchführen eines Anfahrprozesses in dem Spritzgusswerkzeug (40), wobei
a) der Einleger (1) im Spritzgusswerkzeug (40) ein mit Spritzgussmaterial umspritzbares vorbestimmtes Volumen, bei dem das Volumen des Einlegers (1) dem Volumen eines zu umspritzenden konfektionierten Kabels entspricht, bildet;
b) der Einleger (1) vollständig aus Kunststoff hergestellt ist; und
c) ein umspritzter Einleger (1), der zumindest einen Leitungsteil (172), ein umspritztes Anschlussteil (174) sowie eine Steckseite (178) sichtbar aufweist, ein Endprodukt (170) ist, das aus dem Anfahrprozess in dem Spritzgusswerkzeug (40) entstanden ist.

2. Einleger (1) nach Anspruch 1, bei dem der Kunststoff des Einlegers (1) dem Spritzgussmaterial entspricht.

3. Einleger (1) nach Anspruch 1 oder 2, bei dem der Kunststoff Recyclat umfasst.

4. Einleger (1) nach einem der Ansprüche 1 - 3, bei dem der Einleger (1) zumindest drei Bereiche (10, 20, 30) umfasst: einen ersten Bereich (10), der in einem Spritzgusswerkzeug (40) als Klemmbereich für eine Leitung (12) verwendbar ist; einen zweiten Bereich (20), der in dem Spritzgusswerkzeug (40) als Übergangsbereich zwischen dem ersten (10) und einem dritten Bereich (30) umspritzbar ist; und dem dritten Bereich (30), der in dem Spritzgusswerkzeug (40) als Klemmbereich für einen Stecker (36) verwendbar ist.

5. Einleger (1) nach Anspruch 4, bei dem der zweite Bereich (20) ein flexibles Element (24), insbesondere eine Spirale, umfasst.

6. Einleger (1) nach Anspruch 5, bei dem der dritte Bereich (30) durch das flexible Element (24) im zweiten Bereich (20) zumindest in der Dimension einer Halbkugel (S) gegenüber dem ersten Bereich (10) verbogen angeordnet werden kann.

## Claims

1. Insert (1) for an injection-moulding tool (40) in cable fabrication for carrying out a start-up process in the injection-moulding tool (40), wherein
a) the insert (1) forms in the injection-moulding tool (40) a predetermined volume for which overmoulding with injection-moulding material is possible, in which the volume of the insert (1) corresponds to the volume of a pre-assembled cable to be overmoulded;
b) the insert (1) is produced entirely from plastic; and
c) an overmoulded insert (1) visibly having at least a line part (172), an overmoulded connection part (174) and a plug-in side (178) is an end product (170) formed from the start-up process in the injection-moulding tool (40).

2. Insert (1) according to Claim 1, in which the plastic of the insert (1) corresponds to the injection-moulding material.

3. Insert (1) according to Claim 1 or 2, in which the plastic comprises recyclate.

4. Insert (1) according to one of Claims 1-3, in which the insert (1) comprises at least three regions (10, 20, 30): a first region (10) which is usable in an injection-moulding tool (40) as a clamping region for a line (12); a second region (20) for which overmoulding is possible in the injection-moulding tool (40) as a transition region between the first region (10) and a third region (30); and the third region (30) which is usable in the injection-moulding tool (40) as a clamping region for a plug (36).

5. Insert (1) according to Claim 4, in which the second region (20) comprises a flexible element (24), in particular a spiral.

6. Insert (1) according to Claim 5, in which the third region (30) can be arranged so as to be bent in relation to the first region (10), at least within the dimension of a hemisphere (S), by way of the flexible element (24) in the second region (20).

## Revendications

1. Insert (1) pour un outil de moulage par injection (40) dans la confection de câbles pour réaliser un processus de démarrage dans l'outil de moulage par injection (40),
a) l'insert (1) formant dans l'outil de moulage par injection (40) un volume prédéterminé pouvant être surmoulé avec du matériau de moulage par injection, le volume de l'insert (1) correspondant au volume d'un câble confectionné à surmouler ;
b) l'insert (1) étant entièrement fabriqué en matière plastique ; et
c) un insert surmoulé (1), qui présente de manière visible au moins une partie de conduite (172), une partie de raccordement surmoulée (174) ainsi qu'un côté d'enfichage (178), étant un produit final (170) qui résulte du processus de démarrage dans l'outil de moulage par injection (40).

2. Insert (1) selon la revendication 1, la matière plastique de l'insert (1) correspondant au matériau de moulage par injection.

3. Insert (1) selon la revendication 1 ou 2, la matière plastique comprenant un produit recyclé.

4. Insert (1) selon l'une quelconque des revendications 1 à 3, l'insert (1) comprenant au moins trois zones (10, 20, 30) : une première zone (10) utilisable dans un outil de moulage par injection (40) en tant que zone de serrage pour une conduite (12) ; une deuxième zone (20) surmoulable dans l'outil de moulage par injection (40) en tant que zone de transition entre la première (10) et une troisième zone (30) ; et la troisième zone (30) utilisable dans l'outil de moulage par injection (40) en tant que zone de serrage pour un connecteur (36).

5. Insert (1) selon la revendication 4, la deuxième zone (20) comprenant un élément flexible (24), notamment une spirale.

6. Insert (1) selon la revendication 5, la troisième zone (30) pouvant être agencée en étant déformée par l'élément flexible (24) dans la deuxième zone (20) au moins dans la dimension d'une demi-sphère (S) par rapport à la première zone (10).
